# EUROPEAN PATENT APPLICATION

(11) **EP 3 392 618 A1**
(43) Date of publication of application: **24.10.2018**
(21) Application number: 17192798.1
(22) Date of filing: 25.09.2017
(51) Int. Cl.: G01C 21/36

(54) **NAVIGATION INSTRUCTION PROMPTING METHOD, DEVICE, VEHICLE AND NAVIGATOR**

(30) Priority: 21.04.2017 CN 201710267679
(71) Applicant: Beijing Mobike Technology Co., Ltd., Beijing 100083 (CN)
(72) Inventor: WANG, Depi, Haidian District, Beijing, 100083 (CN); JIN, Hongdu, Haidian District, Beijing, 100083 (CN)
(74) Representative: Hübner, Gerd

(57) **Abstract**

A navigation instruction prompting method, a prompting device, a vehicle and a navigator are disclosed. The prompting method comprises: establishing a communication connection between a navigation service providing device and a navigation instruction prompting device arranged on a vehicle; receiving by the navigation instruction prompting device a navigation instruction sent by the navigation service providing device; and prompting prompting a direction to a user by the navigation instruction prompting device in a prompting manner corresponding to the navigation instruction, the prompting manner including one or both of a physical sensation prompting manner and a light emitting prompting manner. According to an embodiment, when a user is prompted a driving direction, distraction of the user's attention is minimized, thereby facilitating traffic safety.

## Description

### FIELD OF THE INVENTION

The present invention relates to the technical field of navigation, and more particularly, to a navigation instruction prompting method, a navigation instruction prompting device arranged on a vehicle, a vehicle and a navigator.

### BACKGROUND OF THE INVENTION

In the prior art, a navigation service providing device generally prompts a direction to a user through navigation images displayed on a display screen. The user needs to observe both the navigation images and road conditions, which will distract the user's visual attention. For example, when the user is riding a bicycle or driving a vehicle, it is not safe to watch the navigation images.

In the prior art, there are implementation manners of voice-broadcasting navigation instructions for a navigation service providing device. The user needs to observe the road conditions while understanding the meaning of the voice navigation instructions, and then performs corresponding operations. Thus, the user's attention is also distracted. In addition, when the user is riding a bicycle, surrounding noise may interfere with the voice-broadcast navigation instructions. As a result, the user may not be able to accurately acquire and understand the navigation instructions, leading to inefficient use. When the navigation instructions are not accurately performed and navigation fails, normal travelling is affected, and traffic safety may be affected.

### SUMMARY OF THE INVENTION

An objective of the present invention is to provide a novel technical solution of a navigation instruction prompting method.

According to the first aspect of the present invention, there is provided a navigation instruction prompting method, comprising: establishing a communication connection between a navigation service providing device and a navigation instruction prompting device arranged on a vehicle; receiving by the navigation instruction prompting device a navigation instruction sent by the navigation service providing device; and prompting prompting a direction to a user by the navigation instruction prompting device in a prompting manner corresponding to the navigation instruction, the prompting manner including one or both of a physical sensation prompting manner and a light emitting prompting manner.

Preferably, the navigation instruction prompting device comprises a physical sensation prompting unit, or a light emitting prompting unit, or a sound generating prompting unit, or a combination thereof.

Preferably, prompting by the navigation instruction prompting device the user of the direction in the prompting manner corresponding to the navigation instruction comprises: when the navigation instruction is a left/right turn, prompting a direction to the user by the navigation instruction prompting device by applying a physical sensation signal to a left/right hand of the user or by applying a light signal at the left/right in front of the user; or when the navigation instruction is a left/right turn at an M-th exit, prompting a direction to the user by the navigation instruction prompting device by applying a physical sensation signal to a left/right hand of the user for M times, or by applying a light signal at the left/right in front of the user for M times; or when the navigation instruction is a turn-back or a go-straight, prompting a direction to the user by the navigation instruction prompting device by applying a sound signal, or by applying physical sensation signals to both hands of the user simultaneously, or by applying light signals at the both sides in front of the user simultaneously.

According to a second aspect of the present invention, there is provided a navigation instruction prompting device for being arranged on a vehicle, which comprises: a communication unit configured for establishing a communication connection with a navigation service providing device, a navigation instruction receiving unit configured for receiving a vehicle navigation instruction sent by the navigation service providing device, and a direction prompting unit configured for prompting a user of a direction in a prompting manner corresponding to the navigation instruction, the prompting manner including one or both of a physical sensation prompting manner and a light emitting prompting manner.

Preferably, the direction prompting unit includes a physical sensation prompting unit, or a light emitting prompting unit, or a sound generating prompting unit, or a combination thereof.

Preferably, the direction prompting unit includes physical sensation prompting units respectively arranged at both sides of a direction controller of the vehicle such that the user can sense the positions of the physical sensation signals when holding the direction controller with both hands.

Preferably, when the navigation instruction is a left/right turn, the physical sensation prompting unit prompts a direction to the user by applying a physical sensation signal to a left/right hand of the user; and/or when the navigation instruction is a left/right turn at an M-th exit, the physical sensation prompting unit prompts a direction to the user by applying a physical sensation signal to a left/right hand of the user for M times; and/or when the navigation instruction is a turn-back or a go-straight, the physical sensation prompting unit prompts a direction to the user by applying physical sensation signals to both hands of the user.

Preferably, the direction prompting unit includes a light emitting prompting unit whose arrangement can facilitate the user to observe a position of a light emitting event.

Preferably, when the navigation instruction is a left/right turn, the light emitting prompting unit prompts a direction to the user by projecting a light signal at a left/right side in front of the user or a left/right turn indication symbol on the ground in front of the user; and/or when the navigation instruction is a left/right turn at an M-th exit, the light emitting prompting unit prompts a direction to the user by projecting a light signal at a left/right side in front of the user for M times or a symbol 1 indicating a left/right turn at the M-th exit on the ground in front of the user; and/or when the navigation instruction is a turn-back or a go-straight, the light emitting prompting unit prompts a direction to the user by emitting light signals at both sides in front of the user simultaneously or projecting a symbol representing a turn-back or a go-straight on the ground in front of the user.

Preferably, the direction prompting unit includes a sound generating prompting unit.

Preferably, when the navigation instruction is a turn-back or a go-straight, the sound generating prompting unit prompts the user of a direction by sending a sound signal.

According to a third aspect of the present invention, there is provided a navigation instruction prompting device for being arranged on a vehicle, which comprises a memory and a processor, wherein the memory is configured to store instructions for controlling the processor to perform operations so as to perform the above-described method.

According to a fourth aspect of the present invention, there is provided a vehicle including any of the above navigation instruction prompting devices.

Preferably, the vehicle is a bicycle, a tricycle, a vehicle, an electric vehicle, a scooter or a motor cycle.

According to a fifth aspect of the present invention, there is provided a navigator including any of the above navigation instruction prompting devices.

The inventor of the preset invention finds that, in the prior art, there is no technical solution using a physical sensation prompting manner or a light prompting manner for promoting a navigation instruction to a user. Therefore, the technical task to be achieved by the present invention or the technical problem to be solved by the present invention has not been conceived or anticipated by those skilled in the art, and thus, the present invention is a novel technical solution. The technical solution of the present invention can minimize distraction of the user's attention and improve traffic safety.

Other features and advantages of the present invention will become apparent from the following detailed description of exemplary embodiments of the present invention with reference to the accompanying drawings.

### BRIEF DESCRIPTION OF THE DRAWINGS

The accompanying drawings, which are incorporated in and constitute a part of the description, illustrate embodiments of the present invention and, together with the description thereof, serve to explain the principles of the present invention.
Fig. 1 is a flow chart of a navigation instruction prompting method provided by Embodiment 1 of the present invention.
Fig. 2 is a block diagram of a navigation instruction prompting device provided by Embodiment 2 of the present invention.
Fig. 3 is a block diagram of the hardware configuration of a navigation instruction prompting device provided by Embodiment 3 of the present invention.

### DETAILED DESCRIPTION OF THE EMBODIMENTS

Various exemplary embodiments of the present invention will now be described in detail with reference to the accompanying drawings. It should be noted that the relative arrangement, numerical expressions and numerical values of the components and steps set forth in these examples do not limit the scope of the invention unless otherwise specified.

The following description of at least one exemplary embodiment is in fact merely illustrative and is in no way intended as a limitation to the present invention and its application or use.

Techniques, methods, and apparatus known to those of ordinary skill in the relevant art may not be discussed in detail but where appropriate, the techniques, methods, and apparatus should be considered as part of the description.

Among all the examples shown and discussed herein, any specific value should be construed as merely illustrative and not as a limitation. Thus, other examples of exemplary embodiments may have different values.

It should be noted that similar reference numerals and letters denote similar items in the accompanying drawings, and therefore, once an item is defined in a drawing, and there is no need for further discussion in the subsequent accompanying drawings.

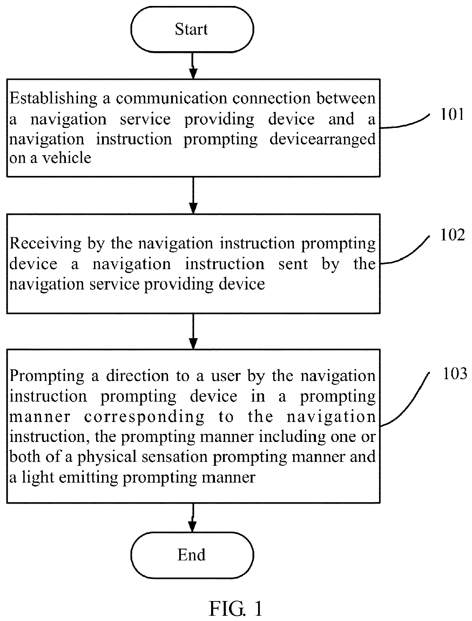

Fig. 1 is a flow chart of a navigation instruction prompting method provided by Embodiment 1 of the present invention. The method includes the following sequentially executed steps.

Step 101 includes establishing a communication connection between a navigation service providing device and a navigation instruction prompting device arranged on a vehicle.

Step 102 includes receiving by the navigation instruction prompting device a navigation instruction sent by the navigation service providing device.

Step 103 includes prompting prompting a direction to a user by the navigation instruction prompting device in a prompting manner corresponding to the navigation instruction, the prompting manner including one or both of a physical sensation prompting manner and a light emitting prompting manner.

The navigation service providing device according to the present invention may be either a navigation APP in the form of software, or a carrier device for running the navigation APP, including a mobile phone, a navigator, or the like, or a cloud server that provides navigation services such as a navigation APP cloud server. The cloud server may directly send the navigation instruction to the navigation instruction prompting device, or to the APP which is in cooperation with the navigation instruction prompting device and which sends the navigation instruction to the navigation instruction prompting device.

The navigation instruction prompting device may establish a communication connection with the navigation service providing device by means of short-range communication, such as Bluetooth, infrared, RFID, NFC tag, sound-magnetic tag or the like, or may establish a connection with the navigation service providing device by a wired connection, or establishes a communication connection with the navigation service providing device through the Internet, a wide area network.

The navigation instruction prompted to the user by the navigation instruction prompting device may be such configured that it may be a subset of all the navigation instructions provided by the navigation service providing device, in which the navigation instruction has corresponding prompting manners in the navigation instruction prompting device. Alternatively, a processor unit may be provided in the navigation instruction prompting device for prompting only ones of the received navigation instructions which have the corresponding prompting manners.

The direction prompting unit may be a physical sensation prompting unit, a light emitting prompting unit or a sound generating prompting unit in the form of hardware, such as a vibrator, a micro-current patch, a light emitting diode, a flashlight, a speaker, etc., or may of course be an instruction interface for a physical sensation signal, a light emitting signal and a sound generating signal for connecting to a physical sensation prompting device, a light emitting prompting device or a sound generating prompting device, so as to send the navigation instructions.

For example, when the navigation instruction is a left/right turn, the navigation instruction prompting device prompts a direction to the user by applying a physical sensation signal to a left/right hand of the user, by applying a light signal at a left/right side in front of the user, or by projecting a left/right turn indication symbol on the ground in front of the user. When the navigation instruction is a left/right turn at an M-th exit, the navigation instruction prompting device prompts a direction to the user by applying a physical sensation signal in M times to a left/right hand of the user, by applying a light signal for M times at a left/right side in front of the user, or by projecting a left/right turn indication symbol at the M-th exit on the ground in front of the user. When the navigation instruction is a turn-back or a go-straight, the navigation instruction prompting device prompts a direction to the user by applying physical sensation signal at both hands of the users simultaneously, by applying light signals or sound signals at both left and right sides in front of the user simultaneously, or by projecting a symbol corresponding to a turn-back or a go-straight on the ground in front of the user.

For example, if the user's left hand feels the physical sensation signal or the user sees the light signal on the left side in front, he/she knows that he/she needs to turn left at front without having to be distracted by looking at the navigation image or by understanding the navigation instruction, which is safer. Another example is that once hearing the beep or "ding dong" sound signal, the user knows to turn back at front, which may be similarly advantageous.

The prompting manners such as physical sensation, light emitting or generating sounds as listed in Example 1 are merely exemplary, and those skilled in the art may perform different implementations for physical sensation, light emitting or sound signals, or different combinations of these signals. Those skilled in the art will also be able to make different designs for physical sensation approaches, light colors, etc., so as to prompt instructions. For example, the application of the short and continuous physical sensation signals to the user's both left and right hands prompts that there is the traffic congestion at front and please slow down, or there is a bike prohibited area at front. Alternatively, for example, red light signals sent at both left and right sides of the user prompt the user to turn back; and green light signals sent at both left and right sides of the user prompt the user to go straight. Those skilled in the art will also be able to combine the prompting approaches provided in the present invention with the conventional ones for use.

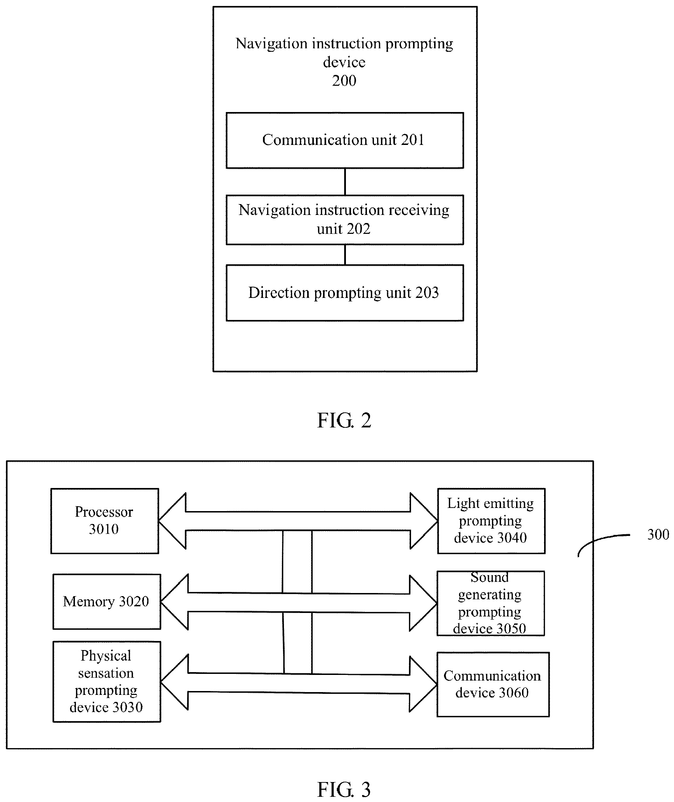

Fig. 2 is a block diagram of a navigation instruction prompting device according to Embodiment 2 of the present invention. The navigation instruction prompting device 200 can be provided in the vehicle and can include a communication unit 201 for establishing a communication connection with the navigation service providing device; a navigation instruction receiving unit 202 for receiving a vehicle navigation instruction transmitted by the navigation service providing device; a direction prompting unit 203 for prompting a user of a direction in a prompting manner corresponding to the navigation instruction, the prompting manner including one or both of a physical sensation prompting and a light prompting. The navigation prompting receiving unit 202 is connected to the communication unit 201 and the direction prompting unit 203, respectively. The navigation service providing device in cooperation with the navigation instruction prompting device 200 is not shown in Fig.2.

The navigation instruction prompted to the user by the navigation instruction prompting device 200 may be such configured that it may be a subset of all the navigation instructions provided by the navigation service providing device, in which the navigation instruction has corresponding prompting manners in the navigation instruction prompting device 200. Alternatively, a processing unit (not shown in figures) may be provided in the navigation instruction prompting device 200 for prompting only the navigation instruction which has the corresponding prompting manners in the received navigation instructions.

For example, it is possible to set navigation instruction prompting device 200 not to prompt such a navigation instruction like "turn left at 500 meters ahead", and when such a navigation instruction is received, the processing unit controls the direction prompting unit 203 not to prompt the navigation instruction. It is possible to set navigation instruction prompting device 200 to prompt such a navigation instruction that "turn left at the front turn", and when the navigation instruction is received, the processing unit controls the direction prompting unit 203 to prompt the navigation instruction.

The direction prompting unit 203 in Embodiment 2 may be a physical sensation prompting unit, a light emitting prompting unit, a sound generating prompting unit or the combination thereof. The direction prompting unit 203 may be, for example, a vibrator, a micro-current patch, a light emitting diode, a flashlight, a speaker, etc. in the form of hardware, and may of course be an instruction interface for a physical sensation signal, a light signal and a sound signal, which can be used to connect to physical sensation device, light device or sound device externally, so as to prompt the navigation instructions.

The various possible configurations of the direction prompting unit 203 are described with reference to examples as below.

The direction prompting unit 203 may include physical sensation prompting units provided at positions of the respective left and right sides of the direction controller of the vehicle for facilitating the physical sensation hand-holding sense of the user. The direction controller may be a handlebar, a steering wheel or the like. The physical sensation prompting unit can be provided on the left and right handlebars or on the left or right side of the steering wheel.

The navigation instruction represented by the physical sensation sense of both hands of the user is described as below with reference to the examples. When the navigation instruction is a left/right turn, the physical sensation prompting unit may prompt a direction to the user by applying a physical sensation signal to the left/right hand of the user. When the navigation instruction is a left/right turn at an M-th exit, the physical sensation prompting device may prompt a direction to the user by applying a physical sensation signal for M times to the left/right hand of the user. When the navigation instruction is a turn-back or a go-straight, the physical sensation prompting unit may prompt a direction to the user by sending physical sensation signals at both hands of the users simultaneously.

The direction prompting unit 203 may include a light emitting promoting unit provided at a position where the user is allowed to easily observe the light emitting event. The light emitting prompting unit may be two separated light-emitting elements respectively provided at right and left; for example, two LED lamps provided respectively at left and right, or may be an element that may be capable of accepting controls and emit lights in the user's left and right directions, for example, a flashlight controlled by a rotating device to rotate the lamp direction. For example, emitting light to the left by the flashlight represents turn left. The light emitted from the light emitting element may be directly projected into the user's eyes or onto the ground in front of the user. The light projected onto the ground in front of the user may be a bright area projected at either the left or the right in front of the user to prompt the left and right direction, or may be a traffic indicating sign under control.

The navigation instruction represented by the light event is described as below with reference to examples. When the navigation instruction is a left/right turn, the navigation instruction prompting unit prompts a direction to the user by projecting a light signal at a left/right side in front of the user, or a left/right turn indication symbol on the ground in front of the user; and/or when the navigation instruction is a left/right turn at an M-th exit, the light prompting unit prompts a direction to the user by projecting a light signal for M times at a left/right side in front of the user, or a left/right turn indication symbol at an M-th exit on the ground in front of the user; and/or when the navigation instruction is a turn-back or a go-straight, the light prompting unit prompts a direction to the user by projecting light signals at both left and right sides in front of the user simultaneously, or by projecting an indication symbol representing a turn-back or a go-straight on the ground in front of the user. Those skilled in the art can also make a meaningful definition for the color of the light signals, for example, red light for prompting turn-back, and green light for prompting turn-left, turn-right or go-straight.

The direction prompting unit 203 may include a sound generating prompting unit. The non-voice sound made by the sound generating prompting unit may be a beep, a ring tone similar to "ding dong", a pleasant tune, etc., and those skilled in the art can set different sounds for different navigation instructions.

The navigation instruction represented by the sound signals by the sound generating prompting unit is described as below with reference to examples. When the navigation instruction is turn-back, the sound generating prompting unit prompts a direction to the user by the sound signal, such as a beep or a prompting sound similar to "ding dong". When the navigation instruction is go-straight, those skilled in the art further can design a piece of pleasant tune for prompting go-straight to the user.

The various prompting units comprised in the direction prompting unit 203 can also be combined together. For example, when the navigation instruction is turn-left, the user can be prompted of a direction by a combination of a physical sensation signal applied to the user's left hand by the physical sensation prompting unit and a sound signal sent by the sound generating prompting unit.

For those skilled in the art, the aforementioned navigation instruction prompting method may be implemented by hardware, software or a combination thereof. Based on the same inventive concept, the navigation instruction prompting method may be implemented with reference to the navigation instruction prompting device of the embodiment of the present invention as illustrated in Fig.3.

Fig. 3 is a block diagram of the hardware configuration of an embodiment capable of realizing the navigation instruction prompting device of the present invention. The navigation instruction prompting device 300 includes a processor 3010, a memory 3020, a physical sensation prompting device 3030, a light emitting prompting device 3040, a sound generating prompting device 3050, etc.

The memory 3020 is configured to store instructions for controlling the processor 3010 to perform operations so as to perform any of the above-described navigation instruction prompting methods.

The processor 3010 may be a central processing unit CPU, a micro central processing unit MCU or the like. For example, the memory 3020 may includes a ROM (Read-only Memory), a RAM (Random Access Memory), a non-volatile memory such as a hard disk and the like.

The physical sensation prompting device 3030 may be micro current-stimulus patches that are arranged at both sides of the user and can sense micro currents when held by the user, or vibration motors that are arranged at both sides of a user and can provide vibrations when held by the user, or the like.

The light emitting prompting device 3040 may be lamps arranged at the both sides in front of the user, a lamp that is controlled by the processor 3010 to project light on the ground on the left or right side in front of the user, or a lamp that is controlled by the processor 3010 to project a traffic indication symbol on the ground in front of the user.

The sound generating prompting device 3050 may be a horn, a buzzer or the like.

A communication device 3060 is configured to establish a communication connection with a navigation service providing device. For example, the communication device 3060 may establish a wired or wireless connection with a navigator or other electronic devices having a navigation function such as a cell phone, a PAD or the like so as to acquire navigation instructions from such a device. For example, the communication device 3060 may establish a wireless connection with a server cooperating with the navigation instruction prompting device 300 so as to acquire navigation instructions from the server.

The navigation instruction prompting device shown in Figure 3 is only illustrative, and is by no means intended to limit the present invention, its use or application. Those skilled in the art should understand that although Figure 3 shows multiple devices, the present invention may only relate to some of them. Those skilled in the art may design the processor to execute the instructions according to the technical solutions disclosed in the present invention, and how to control a processor to operate is a common technology in the art and will not be repeated herein in detail.

The present invention further provides a vehicle including the above navigation instruction prompting device. The vehicle may be a bicycle, a tricycle, a vehicle, an electric vehicle, a scooter or a motor cycle.

The present invention further provides a navigator including the above navigation instruction prompting device.

It should note noted that the respective embodiments of the present description are described in a progressive manner, the focus of each embodiment illustrates the differences from other embodiments, and the same or similar parts among the embodiments may refer to one another. However, those skilled in the art should understand that the above embodiments may be used individually or in combination according to the needs. In addition, as the device embodiments correspond to the method embodiments, the description of the former is relatively simpler, and the related parts may refer to the corresponding parts of the method embodiments. The above-described system embodiments are only illustrative. The modules in these systems described as separate components may be or may not be physically separated.

Further, the flow charts and block diagrams in the drawings show the possible system architecture, functions and operations of the systems, methods and computer program products of multiple embodiments according to the present invention. In this regard, each block in the flow charts and block diagrams may represent one module, or a part of a program segment or codes, which includes one or more executable instructions for realizing predefined logic functions. It should also be noted that in some alternative implementations, the function described in one block may be realized in a sequence different from that described in the drawings. For example, two consecutive blocks may be executed substantially in parallel, and may be executed in an inverse sequence, depending on the related functions. It should also be noted that each block in a block diagram and/or a flow chart and a combination of the blocks in a block diagram and/or a flow chart may be realized by a specific hardware-based system for performing a predefined function or action or may be realized by a combination of specific hardware and computer instructions.

The computer program products provided by the embodiments of the present invention include computer-readable storage media storing program codes. The instructions included in the program codes may be used to perform the methods in the above-described method embodiments. The specific implementations may refer to the method embodiments and will not be repeated herein.

Those skilled in the art may clearly understand that for the sake of convenience and conciseness in description, the specific operation processes of the above-described systems, devices and units may refer to the corresponding processes in the above-described method embodiments and will not be repeated herein.

In the embodiments provided by the present application, it should be understood that the disclosed systems, devices and methods may be realized by other means. The above-described device embodiments are merely illustrative. For example, division of the units is only a logical functional division, and may be realized by other division manners in actual application. For example, multiple units or components may be combined or integrated into another system, or some features may be omitted or may not be executed. Further, the coupling or direct coupling or communication connection illustrated or discussed here may be realized through communication interfaces, and indirect coupling or communication connection between the devices or units may be electrical, mechanical or in other forms.

The units described as separated components may be or may not be physically separated. The components displayed as units may be or may not be physical units, may be located at the same place and may be distributed to multiple network units. A part or all of the units may be selected to realize the purposes of the solutions of the embodiments according to the actual needs.

In addition, the functional units in the embodiments of the present invention may be integrated in a processing unit, or may exist as physically independent units. Two or more units may be integrated into one unit.

When the function is realized in a form of a software function unit and is sold or used as an independent product, it may be stored in a computer-readable storage medium. Based on such understandings, the technical solutions of the present invention or the part thereof contributing to the prior art or a part thereof may be substantially reflected in the form of a software product. The computer software product is stored in a storage medium, and includes several instructions to cause a computer device (which may be a personal computer, a server or a network device) to perform all or part of the steps for performing the methods of the embodiments of the present invention. The storage medium includes a USB disk, a mobile hard disk, a Read-only Memory, a Random Access Memory, a magnetic disk or an optical disk which can store program codes.

It can be appreciated that, while the terms "first", "second" and so on may be used herein to distinguish one entity or operation from another, it does not require or imply such a relation or sequence between these entities or operations. Further, the terms "include", "comprise" or any variation thereof are intended to cover an nonexclusive containing, such that a process, a method, an item or a device containing a series of elements not only includes these elements, but also includes other elements that are not set forth specifically, or also includes an inherent element of such a process, method, item or device. Without further limitation, an element defined by a phrase "include a" does not mean that other elements are excluded from the process, method, item or device.

The above are only preferred embodiments of the present invention and is not intended to limit the present invention. For those skilled in the art, the present invention may have various modifications and changes. Any amendment, equivalent substitution or improvement made within the spirit and principle of the present invention shall be contained in the protection scope of the present invention. It should be noted that similar signs and letters in the following drawings represent similar items. Therefore, once defined in one drawing, an item may not be further discussed in the followed drawings.

While certain specific embodiments of the present invention have been illustrated by way of example, it will be understood by those skilled in the art that the foregoing examples are provided for the purpose of illustration and are not intended to limit the scope of the present invention. It will be understood by those skilled in the art that the foregoing embodiments may be modified without departing from the scope and spirit of the invention. The scope of the present invention is subject to the attached claims.

## Claims

1. A navigation instruction prompting method, **characterized in** comprising:
establishing a communication connection between a navigation service providing device and a navigation instruction prompting device arranged on a vehicle;
receiving by the navigation instruction prompting device a navigation instruction sent by the navigation service providing device; and
prompting a direction to a user by the navigation instruction prompting device in a prompting manner corresponding to the navigation instruction, the prompting manner including one or both of a physical sensation prompting manner and a light emitting prompting manner.

2. The prompting method according to claim 1, **characterized in that** the navigation instruction prompting device comprises a physical sensation prompting unit, or a light emitting prompting unit, or a sound generating prompting unit, or a combination thereof.

3. The prompting method according to claim 1 or 2, **characterized in that** prompting by the navigation instruction prompting device the user of the direction in the prompting manner corresponding to the navigation instruction comprises:
when the navigation instruction is a left/right turn, prompting a direction to the user by the navigation instruction prompting device by applying a physical sensation signal to a left/right hand of the user, or by applying a light signal at the left/right in front of the user, or by projecting a left/right turn symbol on the ground in front of the user; or
when the navigation instruction is a left/right turn at an M-th exit, prompting a direction to the user by the navigation instruction prompting device by applying a physical sensation signal to a left/right hand of the user for M times, or by applying a light signal at the left/right in front of the user for M times, or projecting a symbol representing a left/right turn at the M-th exit on the ground in front of the user; or
when the navigation instruction is a turn-back or a go-straight, prompting a direction to the user by the navigation instruction prompting device by applying a sound signal, or by applying physical sensation signals to both hands of the user simultaneously, or by applying light signals at the both sides in front of the user simultaneously, or by projecting a symbol representing a turn-back or a go-straight on the ground in front of the user.

4. A navigation instruction prompting device for being arranged on a vehicle, **characterized in that** it comprises a memory and a processor, the memory is configured to store instructions for controlling the processor to perform operations so as to perform a method according to any of claims 1-3.

5. A navigator, **characterized in** comprising a navigation instruction prompting device according to claim 4.
